# EUROPEAN PATENT SPECIFICATION

(11) **EP 2 912 332 B1**
(45) Date of publication and mention of the grant of the patent: **14.06.2017**
(21) Application number: 12818637.6
(22) Date of filing: 25.10.2012
(51) Int. Cl.: F16D 65/847

(54) **AIR-COOLED DISK BRAKE FOR INDUSTRIAL APPLICATIONS**
LUFTGEKÜHLTE SCHEIBENBREMSE FÜR INDUSTRIELLE ANWENDUNGEN
FREIN À DISQUE REFROIDI À L'AIR POUR DES APPLICATIONS INDUSTRIELLES

(43) Date of publication of application: 02.09.2015
(73) Proprietor: RE S.p.A. Controlli Industriali, 20122 Milano (IT)
(72) Inventor: ROMANI, Giuseppe, I-20122 Milano MI (IT); RAPICANO, Gianluca, I-20122 Milano MI (IT)
(74) Representative: Ciceri, Fabio
(86) International application number: PCT/IT2012/000330
(87) International publication number: WO 2014/064722

(56) References cited:
- EP-A2- 1 997 758
- WO-A1-93/15943
- WO-A1-2009/115417
- US-A1- 2004 149 529

## Description

The present invention relates to an air-cooled disk brake, particularly for industrial applications, as defined in the preamble of claim 1. Such a disk brake is for instance known from EP-A-1 997 758. Such brakes are used in particular machines that have the purpose of unwinding sheet material from appropriate coils.

Since sheets have to be unwound almost constantly "under tension", said brakes are exposed to accelerated wear of brake parts due to the high operating temperatures for continuous regulation of the braking torque.

Therefore, there is the need for highly versatile brakes, allowing more effective cooling of brake parts as compared with common available brakes.

Therefore, the object of the present invention is to provide an air-cooled brake disk that has such structural and functional features as to fulfill the above needs, while obviating the drawbacks of prior art.

This object is fulfilled by an air-cooled disk brake for industrial applications as defined in claim 1.

Further characteristics and advantages of the disk brake of the present invention will be apparent from the following description of preferred embodiments thereof, which are given by way of illustration and without limitation with reference to the accompanying figures, in which:
- Figure 1 is an exploded view of the brake of the present invention;
- Figure 2 is a perspective view of the friction unit of the brake of Figure 1;
- Figures 3a, 3b are perspective views of the flange halves that form the main brake body;

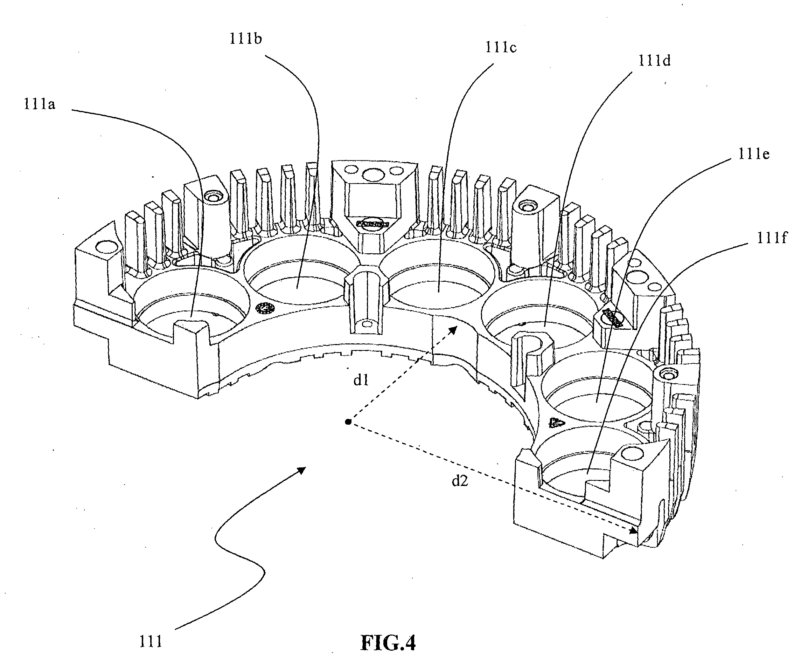

- Figure 4 is a perspective view of a flange half of Figures 3a, 3b;
- Figures 5, 6 and 9 are perspective and sectional views of the brake disk of Figure 1, according to a first embodiment;
- Figures 7, 8 and 10 are perspective and sectional views of the brake disk of Figure 1, according to a second embodiment.

Referring to the annexed figures, numeral 1 generally designates a pneumatically operated brake of the present invention.

As used in the present disclosure and the annexed claims, the term "air-cooled" brake, as opposed to vented disk brakes is intended to designate a disk brake that is cooled by forced air flow, e.g. by appropriate ventilation systems. Furthermore, the brake of the present invention particularly finds use in industrial fields, and is adapted to be associated with shafts of machines and/or equipment such as unwinders, belt conveyors, etc. In view of the above, it shall be noted that the brakes of the invention are not designed for use in vehicles in general.

According to a preferred embodiment, the brake 1 comprises a main body 100 having two interconnectable circular flanges 110, 120 that define an interior housing volume for the various parts of the brake, as set forth below.

The two flanges 110, 120 extend in a roughly longitudinal direction X-X and, in their operably connected state, the preferably have a substantially cylindrical shape with a central hole, i.e. a toroidal shape.

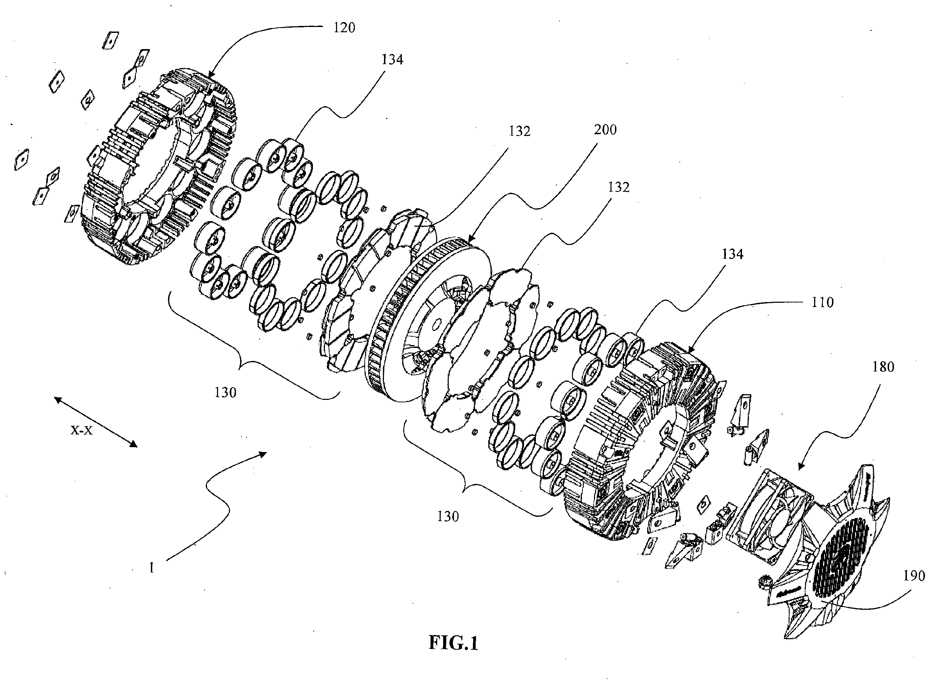

Referring to the example as shown in Figure 1, there are a front flange 110 (to the right of the point of observation in the figure) and a rear flange 120 (to the left of the point of observation in the figure) the latter being preferably adapted to be associated with airflow generating means 180 for ventilation of the brake 1 as explained in detail below.

The front flange 110 and the rear flange 120 are in facing, opposed relationship.

The flanges 110, 120 are integrally connected together by suitable coupling arrangements, not shown in detail and known to the skilled person, to define the main body 100.

The brake 1 comprises a brake disk 200 interposed between the flanges 110, 120 and adapted to be rotated about its own longitudinal axis x₁ which is also the axis of a shaft of an industrial apparatus.

The braking action of the brake 1 is provided by at least one friction unit 130 having at least one longitudinally sliding friction member 132 which is designed to engage with the brake disk 200.

Friction elements 132 include pads made of known materials such as, for example, aramid, resin, ceramic, aluminum oxide, graphite and coal.

The friction unit 130 also comprises at least one pneumatic actuator 134, which is designed to control the longitudinal movement of the friction element 132 on the brake disk 200.

For easy access to the interior of the main body 100 of the brake 1, each flange 110, 120 is advantageously composed of at least two flange halves 111, 112, 121, 122, preferably having a substantially semicircular shape.

These flange halves may be selectively removed to access the relevant sector of the inner volume of the body for appropriate maintenance, such as replacement of the friction material.

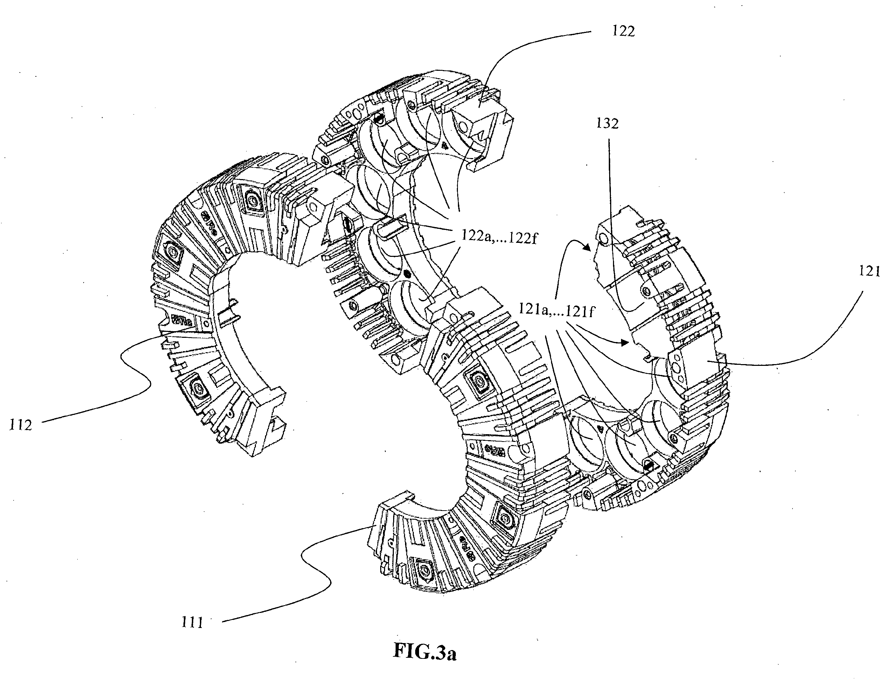

Particularly, referring to the example of Figure 3a, the front flange 110 is composed of a first front flange half 111 and a second front flange half 112, which may be reversibly connected to each other. Likewise, the rear flange 120 is composed of a first rear flange half 121 and a second rear flange half 122, which may be reversibly connected to each other.

It shall be noted that the front flange and the rear flange are connected to each other by rods (not shown) extending in the longitudinal direction X-X, as is known to the skilled person.

In this example, the first front flange half 111 faces the first rear flange half 121 and the second front flange half 112 faces the second rear flange half 122.

Each flange half 111, 112, 121, 122 comprises one to six seats 111a, ... 111f, 112a, ... 112f, 121a, ... 121f, 122a, ... 122f, each seat being adapted to accommodate one pneumatic actuator 134.

Preferably, each flange half 111, 112, 121, 122 comprises up to six seats 111a, ... 111f, 112a, ... 112f, 121a, ... 121f, 122a, ... 122f for the pneumatic actuators 134.

Referring to the embodiment as shown in Figure 3a, the first front flange half 111 comprises six seats 111a, 111b, 111c, 111d, 111e, 111f, which are arranged, as a whole, in side-by-side relationship along the circumference of the flange half 111 in the region bounded by the inside diameter d₁ and the outside diameter d₂ of the flange half 111. Particularly, the seats 111a, 111f are formed on the inner surface, orthogonal to the longitudinal direction X-X of the flange half 111 and have a substantially cylindrical shape. Each seat 111a, ..., 111f accommodates one respective pneumatic actuator 134 by form-fit.

As described concerning the first front flange half 111, the second front flange half 112 comprises six seats 112a, 112b, 112c, 112d, 112e, 112f, which are arranged, as a whole, in side-by-side relationship along the circumference of the flange half 112 in the region bounded by the inside diameter d₁ and the outside diameter d₂ of the flange half 112. Particularly, the seats 112a, ..., 1122f are formed on the inner surface, orthogonal to the longitudinal direction X-X of the flange half 112 and have a substantially cylindrical shape. Each seat 112a, ..., 112f accommodates one respective pneumatic actuator 134 by form-fit.

The above considerations shall obviously apply to the first rear flange half 121 and the second rear flange half 122.

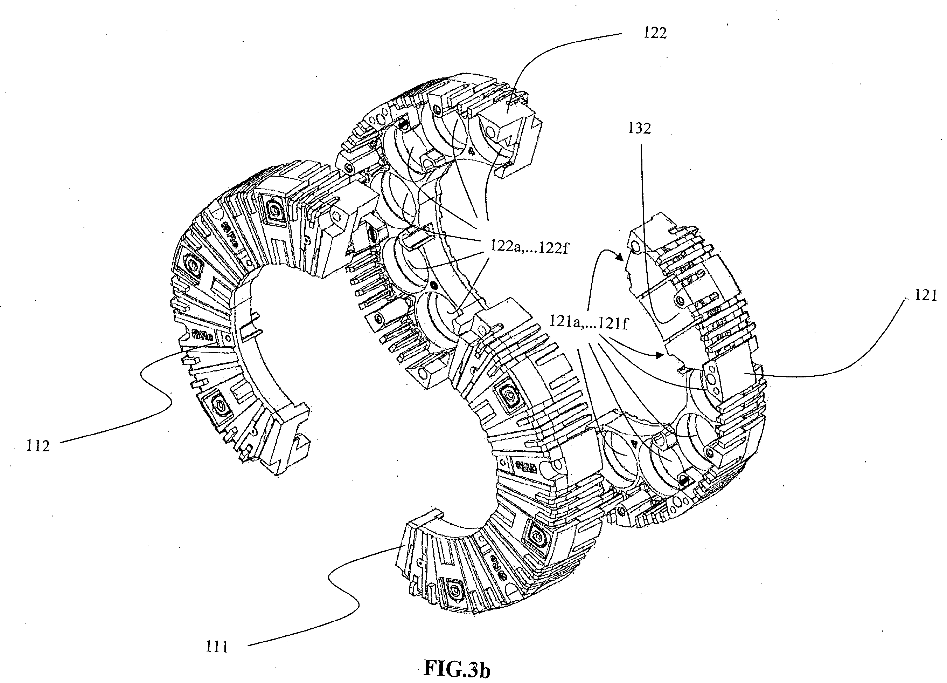

Namely, referring to the example as shown in Figure 3b, the first rear flange half 121 comprises six seats 121a, 121b, 121c, 121d, 121e, 121f, which are arranged, as a whole, in side-by-side relationship along the circumference of the flange half 121 in the region bounded by the inside diameter d₁ and the outside diameter d₂ of the flange half 121. The seats 121a, ..., 121f are formed on the inner surface, orthogonal to the longitudinal direction X-X of the flange half 121 and have a substantially cylindrical shape. Each seat 121a, ..., 121f accommodates one respective pneumatic actuator 134 by form-fit.

Finally, the second rear flange half 122 has six seats 122a, 122b, 122c, 122d, 122e, 122f, which are arranged, as a whole, in side-by-side relationship along the circumference of the flange half 111 in the region bounded by the inside diameter d₁ and the outside diameter d₂ of the flange half 122. Particularly, the seats 122a, ..., 122f are formed on the inner surface, orthogonal to the longitudinal direction X-X of the flange half 122 and have a substantially cylindrical shape. Each seat 122a, ..., 122f accommodates one respective pneumatic actuator 134 by form-fit.

As shown in the examples of Figures 3a, 3b, the seats 111a, ... 111f of the first front flange half 112 face the seats 112a, ... 112f of the second front flange half 112. Likewise, the seats 121 a, ... 121f of the first rear flange half 122 face the seats 122a, ... 122f of the second rear flange half 112.

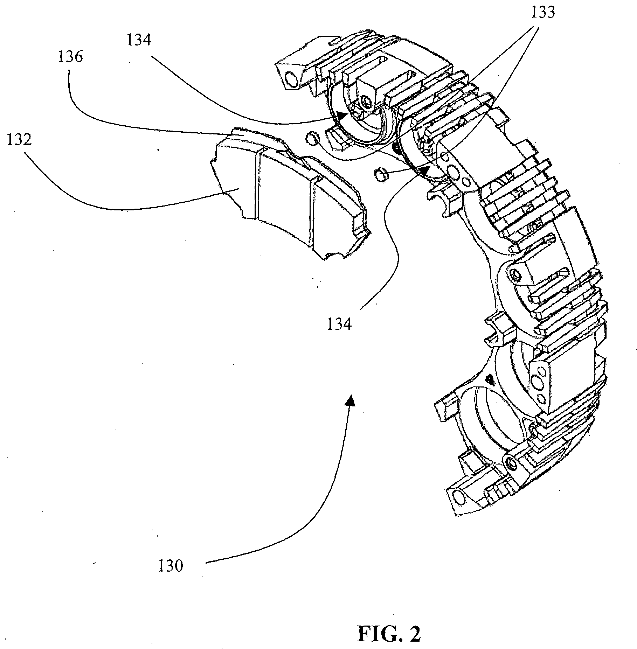

Referring to the example of Figure 2, it shall be further noted that the friction unit 130 of the brake 130 is composed of:
- two pneumatic actuators 134, and
- one friction element 132.

This will improve consumption of the friction element 132 when it is engaged with the brake disk 200.

In one embodiment, the brake 1 of the invention comprises up to six friction units 130 for each flange half 111, 112, 121, 122. Therefore twelve friction units 130 per brake may be provided as a whole.

Also, due to the modularity of the friction units 130, each friction element 132 may be moved independently of the others, thereby ensuring a more effective braking action, as required in certain particular industrial applications.

Each friction unit 130 comprises a pad plate 136 for supporting the friction element 132.

Advantageously, the brake 1 comprises at least one pair of magnets 133 interposed between the pad plate 136 and the pneumatic actuator 134, Thus, the friction element 132 may be retained on the pad plate 136 without using coupling elements.

As mentioned above, the brake 1 has airstream generating means 180 for ventilation of the disk 200, which are associated with the main body 100.

In the example of Figure 1, the generating means 180 include a fan connected to the front flange 110 and protected by a cover 190 that is also designed to be fixed to the front flange 110.

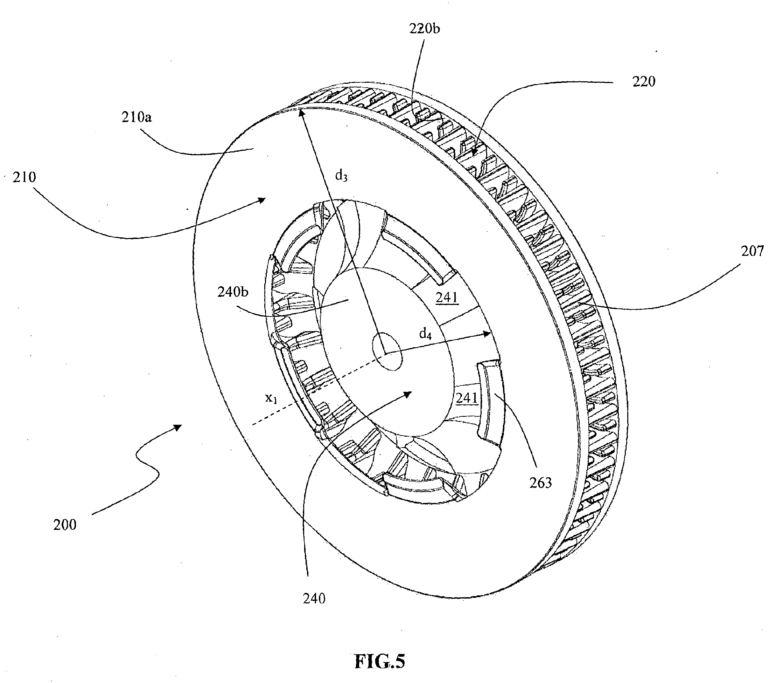

Referring to the examples as shown in Figures 5, 6, 7 and 8, the brake disk 200 comprises first 210 and second 220 coaxial rings, connected to each other by a plurality of radially directed vanes 207.

The brake disk 200 is also provided with a central hub 240, which is adapted to be keyed to the shaft of an industrial apparatus, and is integrally fixed to at least one of said rings 210, 220.

The rings 210, 220 have substantially the same shape and size and each has an outer surface 210a, 220a and an inner surface 210b, 220b. In the illustrated embodiments, the outer surface 210a, 220a is the one designed for engagement with the friction elements 132.

In one embodiment, the central hub 240 is integrally fixed to at least one of said rings 210,220.

The brake disk 200 comprises a plurality of radially directed connection elements 205, for connecting the central hub 240 to at least one of the rings 210, 220.

Preferably, the central hub 240 is fixed to one of the rings 210, 220 of the disk 200 at its inside circumference.

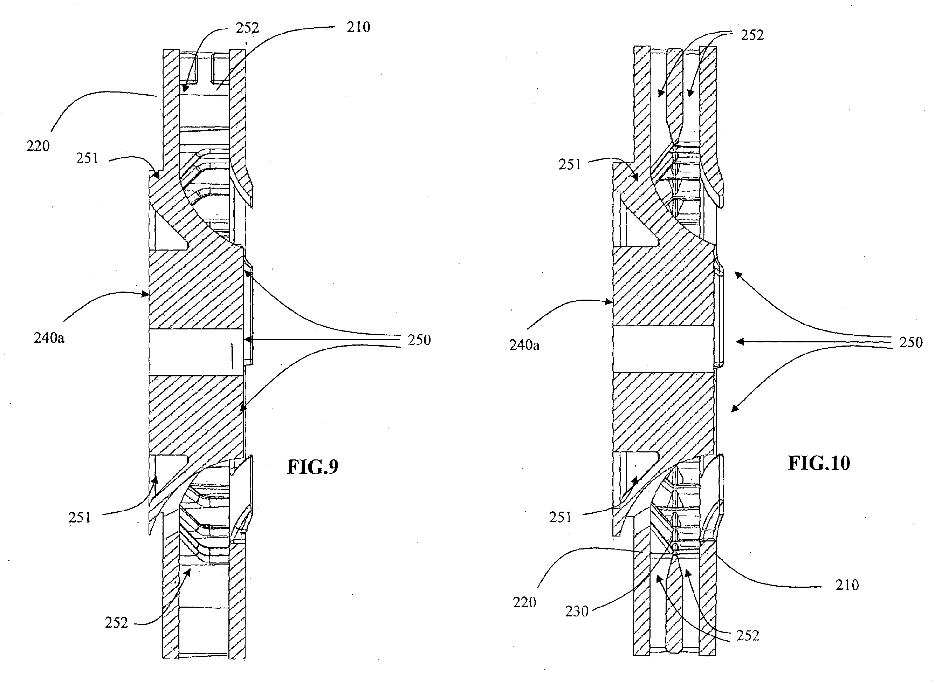

Referring to the examples of Figures 9 and 10, the brake disk 200 advantageously has at least one air inlet 250 between the central hub 240 and at least one of said rings 210, 220. As better explained below, such inlet is designed to convey the airstream to the surfaces 210a, 210b, 220a, 220b of the rings 210, 220, to cool them.

For the airstream to be conveyed to the surfaces 210a, 210b, 220a, 220b of the rings 210, 220 effectively, the central hub 240 advantageously has a substantially frustoconical shape extending between a larger base 240a and a smaller base 240a along the axis x₁.

In the illustrated example, the second ring 220 is the ring that faces the rear flange 120. Here, the larger base 240a of the central hub 240 is connected to the second ring 220 at the inside circumference thereof, by the connection elements 205. It shall be noted that the airstream generated by the generating means 180 is adapted to mainly impinge (longitudinally, along the axis) upon the area of the air inlet 250 between the central hub 240 and the first ring 210.

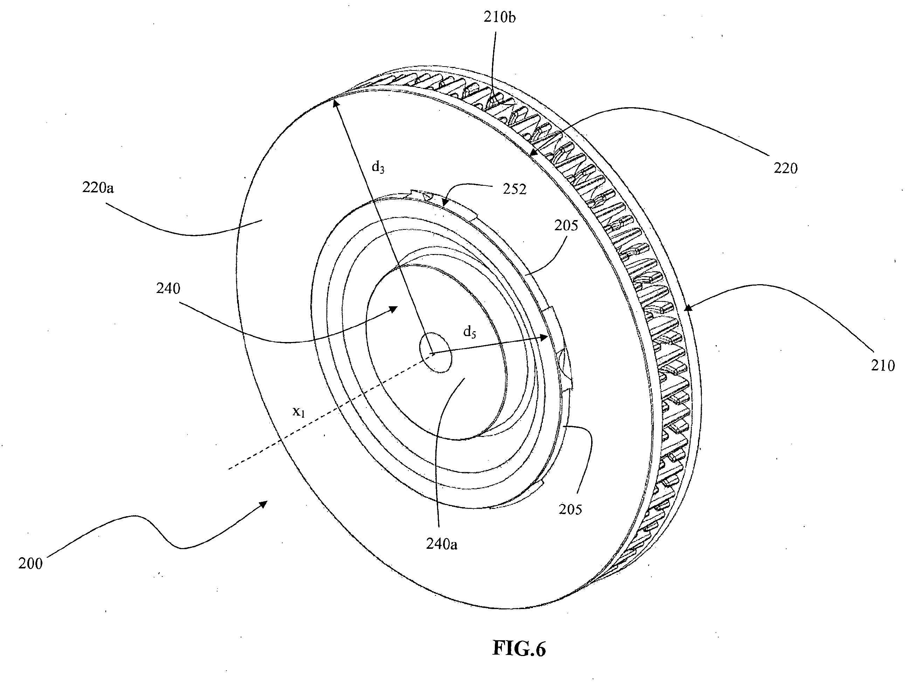

Referring to the example as shown in Figure 6, the connection elements 205 are radially arranged between the central hub 240 and the second ring 220. Thus, first outlets 251 are provided between the connection elements, for directing the inflowing airstream toward the outer surface 220a of the second ring 220. In short, a first ventilation channel is formed between the air inlet 250 and each of the first outlets 251, to convey part of the airstream to the outer surface 220a of the second ring 220.

Preferably, the diameter of the rear base central hub 240 is substantially equal to the diameter of the inside circumference of the second ring 220.

Referring to the examples of Figures 5 to 8, the first and second rings 210, 220 have an outer diameter d₃ preferably ranging in length from 50 mm to 600 mm.

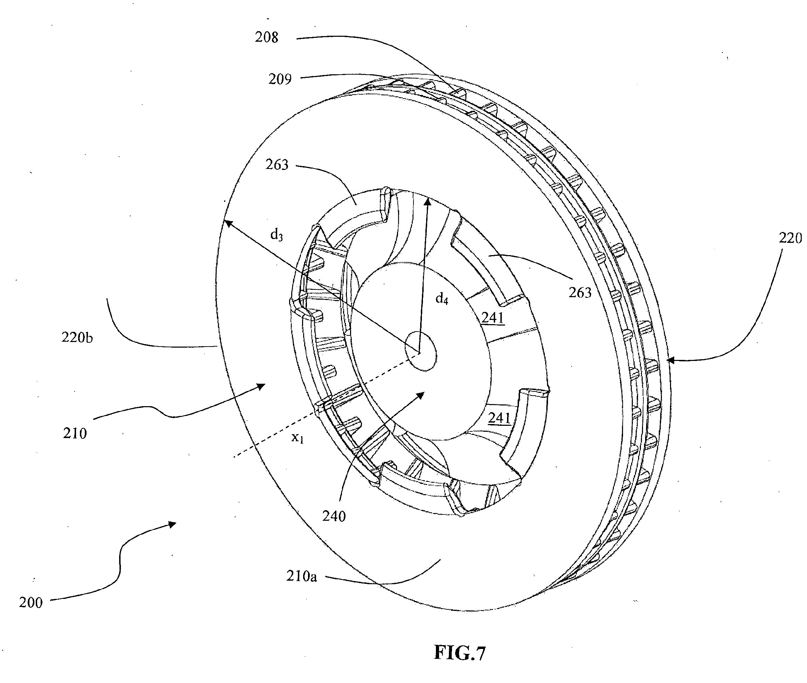

Referring to the examples of Figures 5 and 7, the inner diameter d₄ of the first and second rings 210, 220 ranges in length from 50 mm to 500 mm.

In the example of Figure 6, the brake disk 200 has five connection elements 205 and five respective first outlets 251.

A plurality of radial grooves 241 (acting as chutes) are formed on the lateral surface of the central hub 240, to form the first ventilation channels.

Advantageously, surface portions are defined between the grooves 241 of the central hub 240, to define second ventilation channels.

Each of the second ventilation channels allows a further portion of the airstream generated by the generating means 180 to be conveyed from the air inlet 250 to the vanes 207 of the brake disk 200. Thus, the inner surfaces 210b, 220b of the rings 210, 220 can be cooled.

Concerning ventilation, and the resulting cooling effect on the outer surface 210a of the first ring 210, the brake disk 200 has a plurality of tabs 263 for directing part of the airstream generated by the generating means 180 toward the outer surface 210a of the first ring 210. Namely, the tabs 263 are fixed to the inside circumference of the first ring 210.

The tabs 263 radially extend, as ramps, to a predetermined length. Thus, part of the airstream generated by the generating means 180 is conveyed toward the outer surface 210a of the first ring 210 to cool it.

In one embodiment, the central hub 240 has a hyperboloid structure. Preferably, the central hub 240 has a one-sheeted hyperboloid structure.

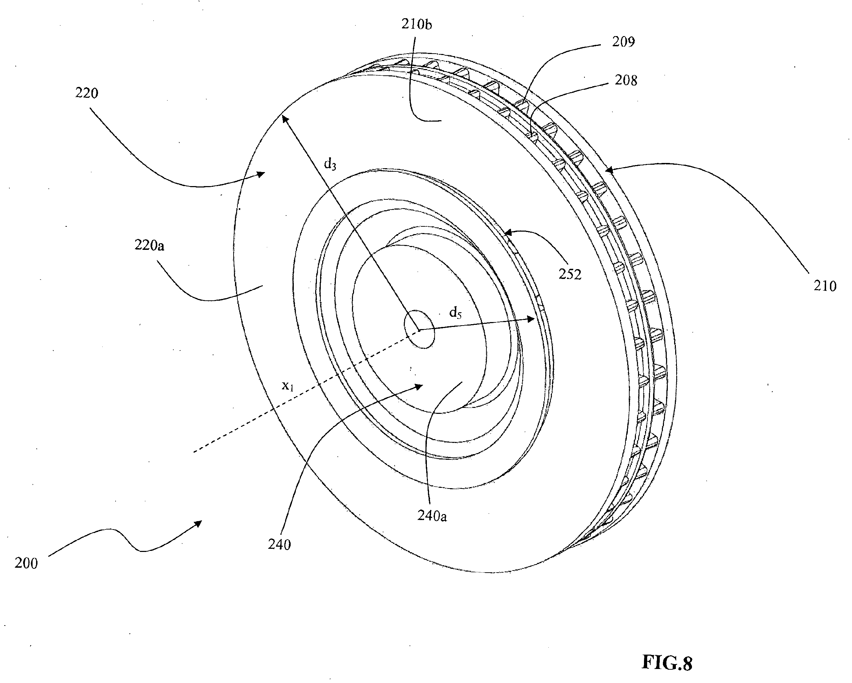

Referring to the embodiments of Figures 6 and 8, the larger base 240a of the central hub 240 projects beyond the outer surface 220a of the second ring 220. Particularly, the larger base 240a and the outer surface 220a are placed on separate and parallel planes.

According to a second embodiment, as shown in Figures 7, 8 and 10, the brake disk 200 (as described with reference to the first embodiment, of Figures 5, 6 and 9) comprises, in addition to first 210 and second 220 rings, also a third ring 230. Such rings 210, 220, 230 are coaxial and connected together by two sets of pluralities of radially directed vanes 208, 209, disposed between said rings. Namely, the third ring 230 is disposed between the first 210 and the second 220 rings. The first set of vanes 208 is circumferentially arranged between the first 210 and the second 230 rings. The second set of vanes 209 is circumferentially arranged between the second 220 and the third 230 rings.

The provision of a third ring 230 allows two separate and parallel ventilation channels to be formed between the first 210 and the third 230 rings and between the second 220 and the third 230 rings. Basically, in such second configuration, part of the airstream generated by the generating means 180 is conveyed from the air inlet 250 to the sets of vanes 208, 209 arranged between the rings 210, 220, 230 of the brake disk 200.

Advantageously, the brake disk 200 is made of one piece.

As clearly shown in the above description, the brake of the present invention fulfills the needs and obviates the drawbacks of the prior art as set out in the introduction of this disclosure.

Instead of or in addition to the above, the air-cooled pneumatically operated brake for industrial applications comprises:
- a fixable body extending along a longitudinal axis, and having a first flange and a second flange;
- connection means for connecting said first flange with said second flange, to define a seat;

- at least one brake disk and at least one friction unit accommodated in said seat and operatively designed for cooperation;
- said first flange and said second flange comprise at least two parts each, said connection means reversibly connecting respective pairs of parts of said first flange and said second flange.

Obviously, the embodiments and examples as disclosed and illustrated herein shall be only intended by way of example, and those skilled in the art will appreciate that a number of changes and variants may be made to the disk brake of the invention as described hereinbefore, including for instance a combination of said embodiments and examples to meet specific needs, without departure from the scope of the invention, as defined in the following claims.

## Claims

1. An air-cooled disk brake (1) for industrial applications comprising:
- a main body (100) adapted to be connected to an industrial apparatus and comprising two interconnectable circular flanges (110, 120) defining an inner volume,
- at least one brake disk (200) interposed between said two flanges (110, 120) and adapted to be rotated about its own longitudinal axis (x₁) which is also the axis of a shaft of said industrial apparatus,
- a friction unit (130) comprising:
- at least one longitudinally sliding friction element (132), designed for engagement with said at least one brake disk (200),
- at least one pneumatic actuator (134), which is designed to control the longitudinal movement of said at least one friction element (132) on said brake disk (200).
**characterized in that** each flange (110, 120) is composed of at least two mutually joinable, substantially semicircular flange halves (111, 112, 121, 122).

2. A brake (1) as claimed in claim 1, wherein:
Each flange half (111, 112, 121, 122) comprises one to six seats (111a, ... 111f, 112a, ... 112f, 121a, ... 121 f, 122a, ... 122f), each of said seats (111a, ... 111f, 112a, ... 112f, 121a, ... 121f, 122a, ... 122f) being adapted to accommodate said pneumatic actuator (134),
and wherein said seats (111a, ... 111f, 112a, ... 112f, 121 a, ... 121 f, 122a, ... 122f) are arranged, as a whole, in side-by-side relationship along the circumference of said individual flange half (111, 112, 121, 122) in the region bounded by the inside diameter (d₁) and the outside diameter (d₂) of the flange half (111,112,121,122).

3. A brake (1) as claimed in claim 1 or 2, wherein said friction unit (130) is composed of two pneumatic actuators (134) which are designed to control the movement of a single friction element (132).

4. A brake (1) as claimed in any of claims 1 to 3, comprising up to six friction units (130) for each flange half (111, 112, 121, 122), each friction element (132) being movable independently of the others.

5. A brake (1) as claimed in any of claims 1 to 4, comprising airstream generating means (180)
associated to said main body (100) and adapted to generate an airstream impinging upon said brake disk (200),
wherein said at least one brake disk (200) comprises:
- at least two coaxial rings (210, 220) connected together by a plurality of radially directed vanes (207),
- a central hub (240), which is adapted to be keyed to the shaft of said industrial apparatus, and is integrally fixed to at least one of said rings (210, 220).
- an air inlet (250) interposed between said hub (240) and at least one of said rings (210, 220) and designed to convey the airstream generated by said generating means (180) to the surfaces (210a, 210b, 220a, 220b) of said rings (210, 220) to cool them.

6. A brake (1) as claimed in any of claims 1 to 5, wherein said at least one brake disk (200) comprises a plurality of radially directed connection elements (205) for connecting said central hub (240) to said at least one of said rings (210, 220).

7. A brake (1) as claimed in any of claims 5 or 6, wherein said central hub (240) has a
substantially frustoconical shape, extending from a larger base (240a) to a smaller base (240b) along said axis (x₁), said larger base (240a) being connected to said second ring (220) at the inside circumference of the latter by connection elements (205).

8. A brake (1) as claimed in any of claims 6 to 7, wherein said connection elements (205) are radially arranged between said central hub (240) and said second ring (220), first air outlets (250) being disposed between said connection elements (205), for conveying the inflowing airstream toward the outer surface (220a) of said second ring (220).

9. A brake (1) as claimed in any of claims 5 to 8, wherein second air outlets (252) are disposed between said first ring (210) and said second ring (220), for conveying the inflowing airstream from said air inlet (250) toward the said plurality of vanes (207) of said disk (200).

10. A brake (1) as claimed in any of claims 1 to 9, wherein said brake disk (200) is made of one piece.

## Patentansprüche

1. Luftgekühlte Scheibenbremse (1) für industrielle Anwendungen, die Folgendes umfasst:
- einen Hauptkörper (100) zum Anschluss an ein industrielles Gerät, der zwei miteinander verbindbare runde Flansche (110, 120) umfasst, die einen Innenraum umgrenzen,
- mindestens eine, zwischen den beiden Flanschen (110, 120) eingesetzte Scheibenbremse (200), die um ihre eigene Längsachse (x₁) drehbar ist, die auch die Achse einer Welle des industriellen Geräts ist,
- eine Reibeinheit (130), die Folgendes umfasst:
- mindestens ein längs verschiebbares Reibelement (132), das für das Einrücken in die mindestens eine Scheibenbremse (200) ausgeführt ist,
- mindestens ein pneumatischer Aktor (134), der für die Steuerung der Längsbewegung des mindestens einen Reibelements (132) auf der Scheibenbremse (200) ausgeführt ist,
**dadurch gekennzeichnet, dass** jeder Flansch (110, 120) aus mindestens zwei im Wesentlichen halbkreisförmigen, miteinander verbindbaren Halbflanschen besteht (111, 112, 121, 122).

2. Bremse (1) nach Patentanspruch 1, wobei:
jeder Halbflansch (111, 112, 121, 122) zwischen einen bis sechs Sitze (111a,... 111f, 112a,...112f, 121a,...121f, 122a, ...122f) umfasst, wobei jeder dieser Sitze (111a,...111f, 112a,...112f, 121a,...121f, 122a, ...122f) zur Aufnahme des pneumatischen Aktors (134) ausgeführt ist
und wobei diese Sitze (111a,...111f, 112a,...112f, 121a,...121f, 122a, ...122f) insgesamt nebeneinander längs des Kreisumfangs des einzelnen Halbflanschs (111, 112, 121, 122) in dem Bereich angeordnet sind, der vom Innendurchmesser (d₁) und vom Außendurchmesser (d₂) des Halbflansches (111, 112, 121, 122) begrenzt wird.

3. Bremse (1) nach Patentanspruch 1 oder 2, wobei die Reibeinheit (130) aus zwei pneumatischen Aktoren (134) besteht, die zur Steuerung der Bewegung eines einzelnen Reibelements (132) ausgeführt sind.

4. Bremse (1) nach einem der Patentanspruch 1 bis 3, die bis zu sechs Reibeinheiten (130) für jeden Halbflansch (111, 112, 121, 122) umfasst, wobei jedes Reibelement (132) unabhängig von den anderen beweglich ist.

5. Bremse (1) nach einem der Patentansprüche 1 bis 4, die ein einen Luftstrom erzeugendes Mittel (180) umfasst, das mit dem Hauptkörper (100) verbunden und zur Erzeugung eines Luftstroms ausgeführt ist, der auf die Scheibenbremse (200) trifft, wobei die mindestens eine Scheibenbremse (200) Folgendes umfasst:
- mindestens zwei koaxiale Ringe (210, 220), die über eine Vielzahl an radial angeordneten Flügeln (207) miteinander verbunden sind,
- eine zentrische Nabe (240), die für eine formschlüssige Verbindung mit der Welle des industriellen Geräts ausgeführt ist und zur Gänze an mindestens einem der Ringe (210, 220) befestigt ist.
- einen Lufteinlass (250) zwischen der Nabe (240) und mindestens einem der Ringe (210, 220), der dazu ausgeführt ist, den von den einen Luftstrom erzeugenden Mitteln (180) erzeugten Luftstrom auf die Oberflächen (210a, 210b, 220a, 220b) der Ringe (210, 220) zu führen, um sie zu kühlen.

6. Bremse (1) nach einem der Patentansprüche 1 bis 5, wobei die mindestens eine Schreibenbremse (200) eine Vielzahl an radial angeordneten Verbindungselementen (205) zur Verbindung der zentrischen Nabe (240) mit mindestens einem der Ringe (210, 220) umfasst.

7. Bremse (1) nach einem der Patentansprüche 5 oder 6, wobei die zentrische Nabe (240) im Wesentlichen kegelstumpfförmig ist und sich längs der Achse (x₁) von einer breiteren Grundfläche (240a) zu einer schmaleren Grundfläche (240b) erstreckt, wobei die breitere Grundfläche (240a) mittels Verbindungselementen (205) am Innenumfangs des zweiten Rings (220) mit Letzterem verbunden ist.

8. Bremse (1) nach einem der Patentansprüche 6 oder 7, wobei die Verbindungselemente (205) radial zwischen der zentrischen Nabe (240) und dem zweiten Ring (220) angeordnet sind, wobei erste Luftauslässe (250) zwischen den Verbindungselementen (205) positioniert sind, um den einströmenden Luftstrom auf die Außenfläche (220a) des zweiten Rings (220) zu führen.

9. Bremse (1) nach einem der Patentansprüche 5 bis 8, wobei zweite Luftauslässe (252) zwischen dem ersten Ring (210) und dem zweiten Ring (220) liegen, um den vom Lufteinlass (250) kommenden Luftstrom zu der Vielzahl von Flügeln (207) der Scheibe (200) zu führen.

10. Bremse (1) nach einem der Patentansprüche 1 bis 9, wobei die Scheibenbremse (200) aus einem Stück gefertigt ist.

## Revendications

1. Frein à disque refroidi par air (1) pour des applications industrielles comprenant :
- un corps principal (100) devant être branché à un appareil industriel et comprenant deux flasques circulaires pouvant être reliées entre elles (110,120) définissant un volume interne.
- au moins un frein à disque (200) insérée entre lesdites flasques (110, 120) et devant tourné autour de son propre axe longitudinal (x₁) qui est également l'axe d'un arbre dudit appareil industriel,
- une unité de friction (130), comprenant :
- au moins un élément de friction coulissant de façon longitudinale (132), conçu pour fonctionner ledit frein à disque (au moins un) (200),
- au moins un actionneur pneumatique (134), qui est conçu pour commander le mouvement longitudinal dudit élément de friction (au moins un) (132) sur ledit frein à disque (200),
**caractérisé par le fait que** chaque flasque (110, 120) est composée d'au moins deux demi-flasques essentiellement semi-circulaires, qui peuvent être unies entre elles (111, 112, 121, 122).

2. Frein (1) selon la revendication 1, où :
Chaque demi-flaque (111, 112, 121, 122) .comprend de un à six sièges (111a, ... 111f, 112a ... 112f, 121a, ... 121f, 122a, ... 122f), chacun desdits sièges (111a ... 111f, 112a ... 112f, 121a, ... 121f, 122a, ... 122f) devant recevoir ledit actionneur pneumatique (134),
et où lesdits sièges (111a, ... 111f, 112a ... 112f, 121a, ... 121f, 122a, ... 122f) sont disposés dans l'ensemble côte à côte le long de la circonférence de ladite demi-flasque individuelle (111, 112, 121, 122), dans la zone délimitée par le diamètre interne (d₁) et le diamètre externe (d₂) de la demi-flasque (111, 112, 121, 122).

3. Frein (1) selon la revendication 1 ou 2, dans lequel ladite unité de friction (130) est composée de deux actionneurs pneumatiques (134) qui sont conçus pour contrôler le mouvement d'un seul élément de friction (132).

4. Frein (1) selon l'une des revendications de 1 à 3, comprenant jusqu'à six unités de friction (130) pour chaque demi-flasque (111, 112, 121, 122), chaque élément de friction (132) étant mobile indépendamment l'un de l'autre.

5. Frein (1) selon l'une des revendications de 1 à 4, comprenant un moyen de génération d'un flux d'air (180) associé audit corps principal (100) et devant générer un flux d'air qui agit sur ledit frein à disque (200),
où ledit frein à disque (au moins un) (200) comprend :
- au moins deux anneaux coaxiaux (210, 220) reliés entre eux par une pluralité d'ailettes placées radialement (207),
- un moyeu central (240), devant être calé sur l'arbre dudit appareil industriel et entièrement fixé à au moins l'un desdits anneaux (210, 220).
- une entrée d'air (250) insérée entre ledit moyeu (240) et au moins l'un desdits anneaux (210, 220) et conçue pour transporter le flux d'air généré par ledit moyen de génération (180) aux surfaces (210a, 210b, 220a, 220b) desdits anneaux (210, 220) afin de les refroidir.

6. Frein (1) selon l'une des revendications de 1 à 5, où ledit frein à disque (au moins un) (200) comprend une pluralité d'éléments de liaison disposés radialement (205) pour connecter ledit moyeu central (240) à au moins un desdits anneaux (210, 220).

7. Frein (1) selon l'une des revendications 5 ou 6, où ledit moyeu central (240) a essentiellement la forme tronconique, s'étendant d'une base plus large (240a) à une base plus étroite (240b) le long dudit axe (x₁), de ladite base plus large (240a) étant reliée et dudit second anneau (220) en correspondance de la circonférence interne de celui-ci par l'intermédiaire des éléments de liaison (205).

8. Frein (1) selon l'une des revendications 6 ou 7, où lesdits éléments de liaison (205) sont disposés radialement entre ledit moyeu central (240) et ledit second anneau (220), des premières sorties d'air (250) étant positionnées entre lesdits éléments de liaison (205), pour transmettre le flux d'air entrant vers la surface extérieure (220a) dudit second anneau (220).

9. Frein (1) selon l'une des revendications de 5 à 8, où des deuxièmes sorties d'air (252) sont positionnées entre ledit premier anneau (210) et ledit second anneau (220) pour transmettre le flux d'air entrant provenant de ladite entrée d'air (250) vers ladite pluralité d'ailettes (207) dudit disque (200).

10. Frein (1) selon l'une des revendications de 1 à 9, où ledit frein à disque (200) est réalisé en une seule pièce.
